# EUROPÄISCHE PATENTSCHRIFT

(11) **EP 0 821 346 B1**
(45) Veröffentlichungstag und Bekanntmachung des Hinweises auf die Patenterteilung: **31.10.2001**
(21) Anmeldenummer: 97110325.4
(22) Anmeldetag: 24.06.1997
(51) Int. Cl.: G10L 17/00

(54) **Verfahren zur Sprecherverifikation durch einen Rechner anhand mindestens eines von einem Sprecher eingesprochenen Sprachsignals**
Method for speaker verification by a computer by means of at least one speech signal spoken in by a speaker
Procédé de vérification de locuteur par un oridinateur à partir d'au moins un signal de parole prononcé par un locuteur

(30) Priorität: 25.07.1996 DE 19630109
(43) Veröffentlichungstag der Anmeldung: 28.01.1998
(73) Patentinhaber: Infineon Technologies AG, 81669 München (DE)
(72) Erfinder: Kämmerer, Bernhard, 85521 Ottobrunn (DE)
(74) Vertreter: Barth, Stephan Manuel, Dr.

(56) Entgegenhaltungen:
- EP-A- 0 121 248
- WO-A-86/05618
- WO-A-96/17341
- DE-A- 4 240 978
- US-A- 4 720 863
- FORSYTH M: "DISCRIMINATING OBSERVATION PROBABILITY (DOP) HMM FOR SPEAKER VERIFICATION" SPEECH COMMUNICATION, Bd. 17, Nr. 1/02, August 1995, Seiten 117-129, XP000642174
- NAIK J M ET AL: "A HYBRID HMM-MLP SPEAKER VERIFICATION ALGORITHM FOR TELEPHONE SPEECH" 19.April 1994 , PROCEEDINGS OF THE INTERNATIONAL CONFERENCE ON ACOUSTICS, SPEECH, SIGNAL PROCESSING (ICASSP), SPEECH PROCESSING 1. ADELAIDE, APR. 19 - 22, 1994, VOL. VOL. 1, PAGE(S) I-153 - I-156 , INSTITUTE OF ELECTRICAL AND ELECTRONICS ENGINEERS XP000529376 * Seite I-153, rechte Spalte - Seite I-155, linke Spalte; Abbildung 2 *

## Beschreibung

Verfahren zur Sprecherverifikation verwenden personenspezifische Eigenschaften der menschlichen Stimme als biometrische Merkmale. Mit ihnen wird die Identitätsüberprüfung einer Person anhand einer kurzen Sprachprobe der jeweiligen Person möglich. Üblicherweise werden bei diesem Verfahren aus mindestens einer digitalen Sprachprobe sprecherspezifische Merkmale extrahiert. Als solche Merkmale eignen sich v. a. akustische Merkmale, welche die personenspezifischen Abmessungen des Vokaltraktes und den typischen zeitlichen Ablauf der Artikulationsbewegungen wiedergeben.

Wie bei Verfahren zur Spracherkennung werden bei den Verfahren zur Sprecherverifikation zwei unterschiedliche Phasen, eine Trainingsphase und eine Testphase unterschieden.

In einer Trainingsphase werden bei sog. textabhängigen Sprecherverifikationsverfahren von einem Benutzer vorgebbare Äußerungen in eine Anordnung, welche das Verfahren zur Sprecherverifikation durchführt, eingesprochen. Für diese Referenzsprachproben werden Referenz-Merkmalsvektoren gebildet, welche aus der digitalen Referenzsprachprobe extrahierte sprecherspezifische Merkmale enthalten. Zur Ermittlung der einzelnen Referenz-Merkmalsvektoren bzw. Merkmalsvektoren aus den Sprachsignalen wird das jeweilige Sprachsignal üblicherweise in kleine, pseudostationäre Abschnitte, die sog. Frames, unterteilt. Für die pseudostationären Abschnitte wird das Sprachsignal als stationär angenommen. Die pseudostationären Abschnitte weisen typischerweise eine zeitliche Länge von ungefähr 10 bis 20 ms auf.

In der Testphase wird für ein eingesprochenes Sprachsignal mindstens ein Merkmalsvektor, üblicherweise eine Vielzahl von Merkmalsvektoren gebildet, welche mit dem mindestens einen Referenz-Merkmalsvektor, welcher aus einer Sprachprobe gebildet wurde, verglichen werden. Die Sprachprobe wurde von der zu verifizierenden Person eingesprochen. Bei genügend kleinem Abstand, d. h. bei großer Ähnlichkeit zwischen dem Merkmalsvektor und dem Referenz-Merkmalsvektor wird der Sprecher als der zu verifizierende Sprecher akzeptiert. Der Toleranzbereich für die Entscheidung, wann ein Sprecher als der zu verifizierende Sprecher akzeptiert bzw. abzulehnen ist, wird üblicherweise in der Trainingsphase ermittelt. Dieser Bereich ist jedoch auch während der Testphase frei vorgebbar entsprechend der benötigten Sicherheitsanforderung an das Verifikationverfahren.

Aus dem Dokument [1] ist das oben beschriebene Verfahren bekannt, bei dem anhand eines Vergleichs des mindestens einen Merkmalsvektors mit dem Referenz-Merkmalsvektor entschieden wird, ob der Sprecher als der zu verifizierende Sprecher akzeptiert wird.

Ein erheblicher Nachteil des in dem Dokument [1] beschriebenen Verfahrens ist darin zu sehen, daß das Verfahren eine erhebliche Unsicherheit bei der Verifikation des Sprechers aufweist. Die Unsicherheit resultiert daraus, daß eine Entscheidungsschwelle für die Akzeptanz oder Zurückweisung des Sprechers bestimmt werden muß. Die Bestimmung der Entscheidungsschwelle erfolgt lediglich anhand von Sprachproben des zu verifizierenden Benutzers.

Ferner sind Verfahren zur Vorverarbeitung eingesprochener Sprachsignale in der Sprachverarbeitung sowie Grundlagen über Merkmalsextraktion und Merkmalsselektion, also Grundlagen über die Bildung von Merkmalsvektoren zu den Sprachsignalen beispielsweise aus dem Dokument [2] bekannt.

Aus dem Dokument [3] ist es bekannt, in der Spracherkennung aus einer Referenzsprachprobe durch zeitliche Verzerrung eine Vielzahl von von der Sprachprobe abgeleiteten Sprachproben zur Bildung einer Vielzahl von Referenz-Merkmalsvektoren, zu benutzen.

Aus dem Dokument [4] ist ein Verfahren zur Speicherverifikation bekannt, in dem Merkmalsvektoren aus einem gesprochenen Sprachsignal gebildet werden und diese mit gespeicherten Merkmalsvektoren eines zu identifizierenden Sprechers und weiteren Sprechern verglichen werden.

Der Erfindung liegt das Problem zugrunde, ein Verfahren zur Sprecherverifikation anzugeben, welches eine verläßlichere Sprecherverifikation ermöglicht als die im Stand der Technik beschriebenen Verfahren.

Das Problem wird durch das Verfahren gemäß Patentanspruch 1 sowie durch das Verfahren gemäß Patentanspruch 2 gelöst.

Bei dem Verfahren gemäß Patentanspruch 1 wird für ein von einem Sprecher eingesprochenes Sprachsignal mindestens ein Merkmalsvektor gebildet. Der Merkmalsvektor wird zum einen mit mindestens einem Referenz-Merkmalsvektor verglichen, der aus einer zuvor von dem zu verifizierenden Sprecher eingesprochenen Sprachprobe gebildet wurde. Ferner wird der Merkmalsvektor mit mindestens einem Gegen-Merkmalsvektor verglichen, der aus einer Sprachprobe gebildet wurde, welche von einem nicht zu verifizierenden Sprecher eingesprochen wurde. Aus den Vergleichen des Merkmalsvektors mit dem Referenz-Merkmalsvektor und dem Gegen-Merkmalsvektor wird ein Ähnlichkeitswert ermittelt und abhängig von dem Ähnlichkeitswert wird der Sprecher als der zu verifizierende Sprecher klassifiziert oder nicht.

Bei dem Verfahren gemäß Patentanspruch 2 wird das Verfahren gemäß Patentanspruch 1 mit den Merkmalen der Bildung des Merkmalsvektors und der Vergleiche des Merkmalsvektors mit dem Referenz-Merkmalsvektors sowie dem Gegen-Merkmalsvektor jeweils für mehrere Sprachsignale durchgeführt. Bei diesem Verfahren wird nicht ein Ähnlichkeitswert für ein Sprachsignal, sondern ein Gesamtähnlichkeitswert durch einen Gesamtvergleich mindestens eines Teils der Folge von Sprachsignalen mit den entsprechenden Referenz-Merkmalsvektoren und Gegen-Merkmalsvektoren gebildet und die Verifikationsentscheidung basiert auf dem ermittelten Gesamtähnlichkeitswert.

Mit diesem Verfahren, welches ebenso die Vorteile des Verfahrens gemäß Patentanspruch 1 aufweist, wird es ferner möglich, eine ganze Folge vorgebbarer Sprachsignale, die beispielsweise sogar von der Anordnung, welche das Verfahren durchführt, pseudozufällig oder zufällig von dem Sprecher abgefragt wird, möglich. Damit wird ein sehr verläßliches, da in der Komplexität gesteigertes Verifikationsverfahren möglich, ohne daß der Aufwand zur Realisierung und Durchführung des Verfahrens mittels eines Rechners in erheblichem Maße erhöht wird.

Vorteilhafte Weiterbildungen der Erfindung ergeben sich aus den abhängigen Ansprüchen.

Als Weiterbildung des Verfahrens gemäß Patentanspruch 2 ist es zur Verbesserung des Verifikationsergebnisses vorteilhaft, die Entscheidung nicht nur anhand des Gesamtähnlichkeitswerts zu treffen, sondern auch in jedem Iterationsschritt, d. h. für jedes Sprachsignal jeweils einen Ähnlichkeitswert zu bilden und das Verfahren nur dann mit weiteren Sprachsignalen fortzuführen, falls der Ähnlichkeitswert um einen vorgebbaren Bereich um einen vorgebbaren Wert abweicht, d. h. wenn jedes einzelne Sprachsignal dem Referenzsprachsignal ähnlich genug ist. Ist er dies nicht, wird der Sprecher nicht als der zu verifizierende Sprecher klassifiziert.

Ferner ist es vorteilhaft, das jeweilige Verfahren mittels eines neuronalen Netzes zu realisieren, wodurch eine sehr einfache Realisierung des Verfahrens und somit eine sehr schnelle Durchführbarkeit des Verfahrens mittels eines Rechners möglich wird.

Eine weitere Beschleunigung der Durchführbarkeit des Verfahrens wird durch eine sog. Perzeptron-Struktur des neuronalen Netzes erreicht.

Da es auch vorgesehen ist, daß eine Vielzahl von Referenz-Sprachproben sowie von Gegen-Merkmals-Sprachproben und somit von Referenz-Merkmalsvektoren und Gegen-Merkmalsvektoren in dem Verfahren berücksichtigt werden, ist es für diesen Fall erforderlich, eine Vielzahl von Sprachproben von den jeweiligen Sprechern einsprechen zu lassen und zu speichern. Dies führt zu einem erhöhten, für einen Benutzer sehr unangenehmen Zusatzaufwand. Der Zusatzaufwand wird bei dem Verfahren durch eine Weiterbildung erheblich vermindert, bei dem lediglich nur eine Sprachprobe von dem zu verifizierenden Sprecher und/oder von dem weiteren Sprecher, der nicht der zu verifizierende Sprecher ist aufgenommen und verarbeitet wird. Für die jeweilige Sprachprobe werden mittels zeitlicher Verzerrungen der jeweiligen Sprachprobe weitere Sprachproben abgeleitet, welche ebenso als Referenz-Sprachproben bzw. Gegen-Sprachproben und somit als Referenz-Merkmalsvektoren und Gegen-Merkmalsvektoren verwendet werden können.

Eine weitere Vereinfachung des Verfahren und eine erhebliche Einsparung des Speicherplatzbedarfs bei dem das Verfahren durchführenden Rechner wird mit einer Weiterbildung des Verfahrens erreicht, bei dem das verwendete Sprachsignal jeweils ein einzelner Buchstabe und/oder eine einzelne gesprochene Ziffer repräsentiert.

Das Verfahren kann vorteilhaft zur Besitzer- bzw. Benutzerverifikation in Telekommunikationsendgeräten bzw. in Mobilfunktendgeräten eingesetzt werden.

Ein Ausführungsbeispiel der Erfindung ist in den Figuren dargestellt und wird im weiteren näher erläutert.

Es zeigen
- Fig. 1: eine Skizze, in der das Einsprechen eines Sprachsignals und dessen Verarbeitung in einem Rechner mit dem Verfahren zur Sprecherverifikation für ein Sprachsignal dargestellt ist;
- Fig. 2: eine Skizze, in der das Einsprechen mehrerer Sprachsignale und deren Verarbeitung in einem Rechner nach dem Verfahren zur Sprecherverifikation unter Verwendung einer Folge von eingesprochenen Sprachsignalen dargestellt ist;
- Fig. 3: eine Skizze eines neuronalen Netzes, unter dessen Verwendung die Sprecherverifikation in einer Weiterbildung des Verfahrens in sehr einfacher Weise durchgeführt werden kann.

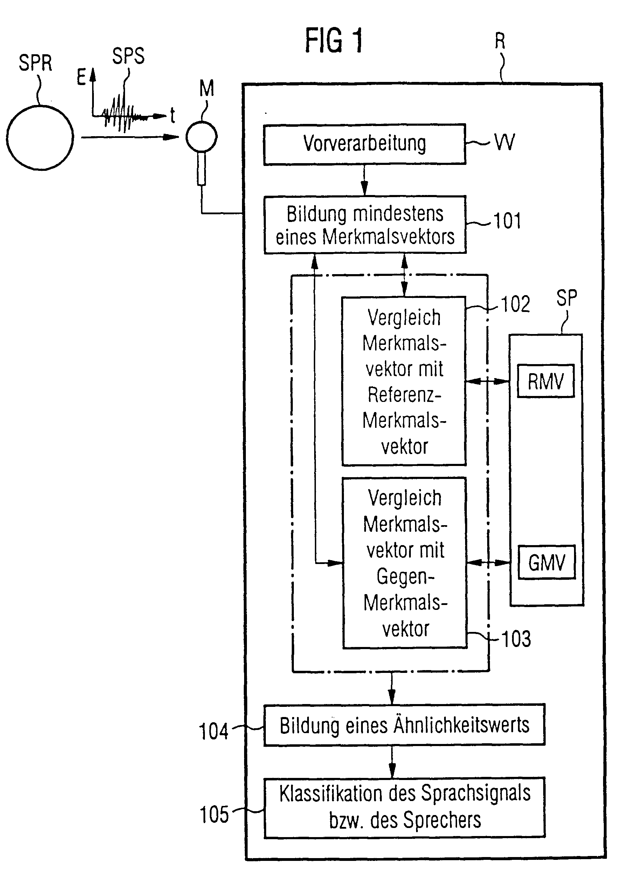

In Fig. 1 ist in Form einer Skizze ein Sprecher SPR dargestellt, der ein beleibiges Sprachsignal SPS in einen Rechner R einspricht, beispielsweise über ein beliebiges, mit dem Rechner R gekoppeltes Mikrophon M.

Das Sprachsignal SPS wird dem Rechner R zugeführt und optional einer Vorverarbeitung VV unterzogen, bei der beispielsweise das Sprachsignal SPS in einzelne sog. Frames aufgeteilt wird und die einzelnen Frames beispielsweise einer Fast-Fourier-Transformation und/oder einer sog. cepstralen Glättung und/oder einer Geräuschkompensation unterzogen wird.

Ferner kann in der Vorverarbeitung VV eine Wortgrenzendetektion, beispielsweise anhand von der Energie E des Sprachsignals SPS oder anderer adaptiver Merkmale des Sprachsignals SPS oder anhand einer sog. Plausibilitätskontrolle durchgeführt werden. Auch kann in der Vorverarbeitung VV für das Sprachsignal SPS eine sog. quasilineare Segmentierung durchgeführt werden. Weitere Schritte in der Vorverarbeitung VV können selbstverständlich ohne Einschränkungen in dem Verfahren durchgeführt werden.

Unter dem Rechner R ist im Rahmen dieses Verfahrens jegliche Anordnung zu verstehen, mit deren Hilfe dieses Verfahren durchgeführt werden kann, beispielsweise auch eine zusätzliche Computerkarte, beispielsweise eine sog. PCMCIA-Karte oder eine Chipkarte. Der Begriff Rechner R ist also keineswegs ausschließlich auf eine komplette elektronische Datenverarbeitungsanlage mit zusätzlicher Peripherie zu verstehen, sondern jede Schaltungsanordnung, mit der dieses Verfahren durchgeführt werden kann, wird im Rahmen dieses Dokuments als Rechner R bezeichnet.

Vor dem eigentlichen Verfahren werden als vorbereitende Verfahrensschritte üblicherweise Sprachproben, die im Verfahren verwendet werden, ermittelt und bearbeitet, wie im weiteren erläutert wird.

Es wird zum einen mindestens eine Sprachprobe in Form mindestens eines vorgebbaren Sprachsignals von einem zu verifizierenden Sprecher in den Rechner R eingesprochen, welche im folgenden als Referenz-Sprachsignal bezeichnet wird. Aus dem Referenz-Sprachsignal wird nach einer ebenso optionalen Vorverarbeitung des Referenz-Sprachsignals mindestens ein Referenz-Merkmalsvektor RMV gebildet, der in einem Speicher SP des Rechners R gespeichert wird.

Nach dem Einsprechen einer beliebigen Anzahl von Referenz-Sprachsignalen und Bildung der entsprechenden Referenz-Merkmalsvektoren RMV und deren Speicherung in dem Speicher SP werden Sprachproben von mindestens einem Sprecher, der nicht der zu verifizierende Sprecher ist, der im folgenden als nicht zu verifizierender Sprecher bezeichnet wird, eingesprochen. Dieses mindestens eine, von dem nicht zu verifizierenden Sprecher eingesprochenen Sprachsignal wird im weiteren als Gegen-Sprachsignal bezeichnet. Das Gegen-Sprachsignal wird ebenso optional einer Vorverarbeitung unterzogen und es wird mindestens ein Gegen-Merkmalsvektor GMV für das jeweilige Gegensprachsignal gebildet. Der Gegen-Merkmalsvektor GMV wird ebenso in dem Speicher SP gespeichert.

Zur Bildung des mindestens einen Referenz-Merkmalsvektors RMV sowie des mindestens einen Gegen-Merkmalsvektors GMV werden beispielsweise die aus dem Dokument [2] bekannten Verfahren zur Merkmalsextraktion und Bildung von Merkmalsvektoren sowie zur Merkmalsselektion verwendet.

Weitere Verfahren zur Bildung von Merkmalsvektoren können jedoch ohne Einschränkungen im Rahmen dieses Verfahrens verwendet werden.

Nach Beendigung der sog. Trainingsphase, also der Verarbeitung des mindestens einen Referenz-Merkmalsvektors RMV sowie des mindestens einen Gegen-Merkmalsvektors GMV wird das eigentliche Verfahren durchgeführt.

Dabei wird zu dem von dem Sprecher SPR eingesprochenen Sprachsignal SPS nach einer optionalen Vorverarbeitung VV des Sprachsignals SPS zu dem Sprachsignal SPS mindestens ein Merkmalsvektor MV gebildet 101. Dabei ist zu beachten, daß zwar grundsätzlich die Wahl der Verfahren zur Bildung des jeweiligen Merkmalsvektors MV, RMV, GMV beliebig ist, jedoch die Merkmalsvektoren MV, RMV, GMV alle auf die gleiche Weise gebildet werden sollten, um einen Vergleich der Merkmalsvektoren, wie er im weiteren beschrieben wird, überhaupt sinnvoll zu ermöglichen.

Nach Bildung des mindestens einen Merkmalsvektors MV 101, wird der Merkmalsvektor MV mit dem mindestens einem Referenz-Merkmalsvektor RMV verglichen 102.

Ferner wird der Merkmalsvektor MV mit dem mindestens einen Gegen-Merkmalsvektor GMV verglichen 103.

Die Vergleiche können unter Verwendung beliebiger in der Sprachverarbeitung bekannter Verfahren zur Abstandsermittlung von Merkmalsvektoren in dem sog. Merkmalsraum durchgeführt werden.

Wird das Sprachsignal SPS sowie das Referenz-Sprachsignal und das Gegen-Sprachsignal in die sog. Frames aufgeteilt, so werden für die Frames jeweils Merkmalsvektoren MV, RMV, GMV gebildet und miteinander verglichen. Im Rahmen dieser Vergleiche können auch beliebige Verfahren zur Berücksichtigung von Clustern, die beispielsweise durch eine Mehrzahl von Referenz-Merkmalsvektoren RMV und/oder einer Mehrzahl von Gegenmerkamalsvektoren GMV im Rahmen des Verfahrens entstehen, verwendet werden. Bekannt sind hierbei beispielsweise der sog. Minimum-Abstands-Klassifikator oder auch der sog. nächste Nachbar-Klassifikator oder auch der sog. Mahalanobis-Abstands-Klassifikator.

Aus den Vergleichen 102, 103 des Merkmalsvektors MV mit dem Referenz-Merkmalsvektor RMV und dem Gegen-Merkmalsvektor GMV wird ein Ähnlichkeitswert AW ermittelt 104. Dies erfolgt beispielsweise mittels der mit den Verfahren zur Abstandsermittlung der Merkmalsvektoren ermittelten Ergebnisse.

Weitere Alternativen zur Bildung des Ähnlichkeitswertes AW werden im Rahmen von Weiterbildungen des Verfahrens detailliert erläutert.

Weicht der Ähnlichkeitswert AW höchstens um einen vorgebbaren Bereich um einen vorgebbaren Wert ab, so wird der Sprecher SPR als der zu verifizierende Sprecher ZVS klassifiziert und somit verifiziert 105.

Weicht jedoch der Ähnlichkeitswert AW nicht um den vorgebbaren Bereich um den vorgebbaren Wert ab, so wird der Sprecher SPR nicht als der zu verifizierende Sprecher ZVS klassifiziert 105.

Das Sprachsignal SPS ist ein beliebiges Sprachsignal, welches durch Rauschen begrenzt wird.

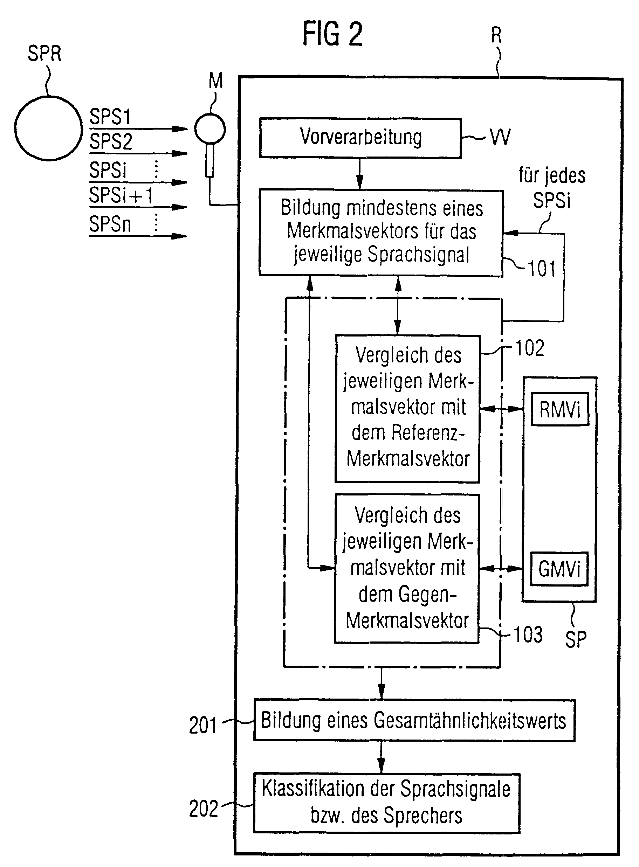

Zur Verbesserung der Verläßlichkeit des Verfahrens ist es vorgesehen, nicht lediglich ein Sprachsignal SPS zur Verifikation des Sprechers SPR zu verwenden, sondern eine vorgebbare Folge von Sprachsignalen SPSi, wobei mit i ein Index bezeichnet wird, der jedes Sprachsignal SPSi eindeutig identifiziert. Der Index i ist eine beliebige Zahl zwischen 1 und n, wobei mit n eine Anzahl berücksichtigter Sprachsignals SPSi bezeichnet wird (vgl. Figur 2).

Werden mehrere, voneinander unabhängige Sprachsignals SPSi verwendet, die beispielsweise auch von dem Rechner R zufällig ausgewählt und von dem Sprecher SPR als vorgegebene Sprachprobe angefordert, d. h. abgefragt werden können, wird für jedes Sprachsignal SPSi jeweils mindestens ein Merkmalsvektor MVi gebildet 101. Der mindestens eine Merkmalsvektor MVi wird mit dem mindestens einen, zuvor gebildeten und gespeicherten zugehörigen Referenz-Merkmalsvektor RMVi zu dem jeweiligen Sprachsignal SPSi und mit dem mindestens einen Gegen-Merkmalsvektor GMVi verglichen 102, 103.

Es wird bei diesem Verfahren nicht für jeden Merkmalsvektor MVi der Ähnlichkeitswert AW gebildet, sondern es wird ein Gesamtähnlichkeitswert GAW für mindestens einen Teil der eingesprochenen Sprachsignale SPSi gebildet 201, und der Sprecher SPR wird als der zu verifizierende Sprecher klassifiziert, wenn der Gesamtähnlichkeitswert GAW um einen vorgebbaren zweiten Bereich um einen vorgebbaren zweiten Wert abweicht 202.

Weicht der Gesamtähnlichkeitswert GAW nicht um den zweiten Bereich um den zweiten Wert ab, so wird der Sprecher SPR nicht als der zu verifizierende Sprecher klassifiziert 202.

Die Bildung des Gesamtähnlichkeitswertes GAW erfolgt beispielsweise ebenso unter Verwendung der oben beschriebenen Verfahren zur Abstandsmessung in einem Merkmalsraum oder auch in einer im folgenden im Rahmen von Weiterbildungen der Verfahren beschriebenen Weise.

In einer Weiterbildung des Verfahrens ist es vorgesehen, das Verfahren für mehrere Sprachsignale SPSi mit einem Verfahrensschritt zu erweitern, bei dem für jedes Sprachsignal SPSi ein Ähnlichkeitswert AW auf die gleiche Weise ermittelt wird, wie dies bei dem Verfahren für lediglich ein Sprachsignal SPS beschrieben wurde. Bei dieser Weiterbildung wird nur dann das nächste Sprachsignal SPSi+1 berücksichtigt und untersucht, wenn der jeweils ermittelte Ähnlichkeitswert AW für das jeweilige Sprachsignal SPSi um einen vorgebbaren dritten Bereich um einen vorgebbaren dritten Wert abweicht. Durch diese Vorgehensweise wird die Verläßlichkeit der Verifikationsergebnisse weiter erhöht.

In einer Weiterbildung der Verfahren ist es vorgesehen, die Vergleiche nicht explizit durchzuführen, sondern die Vergleichsinformation in den Vergleichsschritten 102, 103 im Rahmen eines sog. diskriminativen Verfahrens zu ermitteln. Dabei wird in einer Trainingsphase das Informationsmaterial in Form des mindestens einen Referenz-Merkmalsvektors RMV und des mindestens einen Gegen-Merkmalsvektor GMV als Koeffizienten des diskriminativen Verfahrens für die Testphase gebildet und gespeichert.

In dem eigentlichen Verfahren zur Sprecherverifikation, der sog. Testphase, wird der Merkmalsvektor MV oder die Merkmalsvektoren MVi lediglich dem diskriminativen Verfahren zugeführt und als Ergebnis wird der Ähnlichkeitswert AW oder der Gesamtähnlichkeitswert GAW ermittelt.

Die Vergleiche 101, 102 des mindestens einen Merkmalsvektors MV mit dem Referenz-Merkmalsvektor RMV bzw. dem Gegen-Merkmalsvektor GMV erfolgen imiplizit im Rahmen der Testphase des diskriminativen Verfahren.

Unter einem diskriminativen Verfahren ist beispielsweise eine sog. Polynom-Klassifikation oder ein Verfahren, welches mindestens ein neuronales Netz NN verwendet, zu verstehen.

Es ist vorteilhaft, das Verfahren unter Verwendung eines neuronalen Netzes NN zu realisieren, da dadurch die Durchführbarkeit des Verfahrens mit Hilfe des Rechners R erheblich beschleunigt wird.

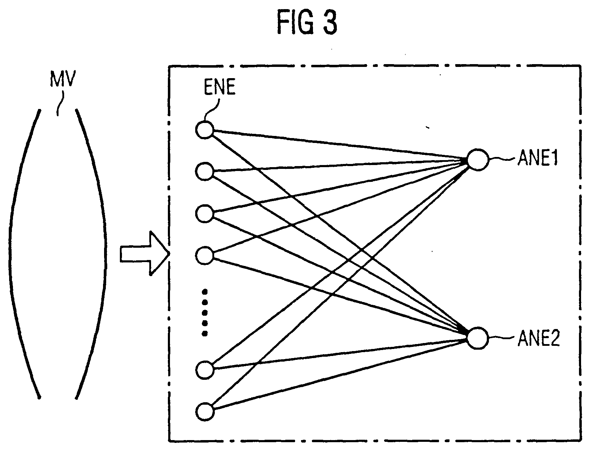

Das Verfahren wird durch die Weiterbildung der Verwendung des neuronalen Netzes NN mit einer sog. Perzeptron-Struktur weiter vereinfacht, womit das Verfahren schneller durchführbar wird. Das neuronale Netz NN mit einer Perzeptron-Struktur ist beispielhaft in Fig. 3 dargestellt.

Dabei entspricht eine Anzahl von Eingangsneuronen EN des neuronalen Netzes NN vorzugsweise der Anzahl von Komponenten des Merkmalsvektors MV, also der Dimensionalität des Merkmalsvektors MV. In dieser einfachen Struktur des neuronalen Netzes NN sind für das neuronale Netz NN zwei Ausgangsneuronen ANE1, ANE2 vorgesehen. Ein erstes Ausgangsneuron ANE1 repräsentiert die Entscheidung, daß der Sprecher SPR nicht als der zu verifizierende Sprecher klassifiziert wird. Ein zweites Ausgangsneuron ANE2 repräsentiert die Entscheidung, daß der Sprecher SPR als der zu verifizierende Sprecher klassifiziert wird.

Es ist jedoch in einer Variante vorgesehen, lediglich ein Ausgangsneuron zu verwenden. Das Ausgangsneuron zeigt durch seine Aktivierung mit einem ersten Wert, z. B. dem Wert 0, an, ob der Sprecher SPR nicht als der zu verifizierende Sprecher klassifiziert wird oder mit einem zweiten Wert, z. B. dem Wert 1, an, ob der Sprecher SPR als der zu verifizierende Sprecher klassifiziert wird. Durch diese Variante wird die Anzahl benötigter Gewichte in dem neuronalen Netz NN halbiert.

Unter Verwendung des neuronalen Netzes NN wird der Vergleich 101, 102 des Merkmalsvektors MV mit dem Referenz-Merkmalsvektor RMV und dem Gegen-Merkmalsvektor GMV implizit dadurch realisiert, daß das neuronale Netz NN in der Trainingsphase des neuronalen Netzes NN mit dem mindestens einen Referenz-Merkmalsvektor RMV und dem Gegen-Merkmalsvektor GMV trainiert wird. Dabei werden die Gewichte des neuronalen Netzes NN in einer Weise adaptiert, daß ausgehend von den zur Verfügung stehenden Trainingsdaten, also dem Referenz-Merkmalsvektor RMV und dem Gegen-Merkmalsvektor GMV eine möglichst optimale Klassifikation in diesem 2-Klassen-Problem erreicht wird.

Wird nun der Merkmalsvektor MV dem neuronalen Netz NN zugeführt, d. h., werden die einzelnen Komponenten MV den Eingangsneuronen ENE zugeführt, so findet der Vergleich implizit durch Gewichtung der einzelnen Kopplungen des neuronalen Netzes mit den Ausgangsneuronen ANE1, ANE2 des neuronalen Netzes NN statt. Der jeweilige Bereich, um den der Ähnlichkeitswert AW jeweils von dem vorgegebenen Wert abweichen muß ist, erfolgt durch Adaption der Geweichte des neuronalen Netzes NN in der Trainingsphase.

Die Einstellung des Bereiches, ab wann ein Sprachsignal SPS als zu dem zu verifizierenden Sprecher gehörig angesehen werden soll, ist abhängig von dem Sicherheitsbedürfnis der jeweiligen Anwendung.

Mit dem Ähnlichkeitswert AW, der bei Verwendung des neuronalen Netzes NN ebenfalls implizit in den Gewichten des neuronalen Netzes NN enthalten ist, wird zum einen die Ähnlichkeit des Sprachsignals SPS bzw. des Merkmalsvektors MV mit dem Referenz-Sprachsignal repräsentiert bzw. die Ähnlichkeit des Sprachsignals mit dem Gegen-Sprachsignal, also auch die "Nicht-Ähnlichkeit". Diese beschreibt den Grad der Unterschiedlichkeit des Merkmalsvektors MV bzw. des Sprachsignals SPS und des Gegen-Merkmalsvektors GMV bzw des Gegen-Sprachsignals.

Es ist in einer Weiterbildung der Verfahren ferner vorgesehen, daß eine Mehrzahl von Referenz-Merkmalsvektoren RMV und/oder eine Mehrzahl von Gegenmerkmalsvektoren in dem Verfahren berücksichtigt wird.

Dies bedeutet eine Mehrzahl von zu berücksichtigender Sprachproben, die entweder von dem zu verifizierenden Sprecher oder von mindestens einem weiteren, nicht zu verifizierenden Sprecher eingesprochen werden müssen.

Um die für den Benutzer unangenehme Aufgabe des wiederholten Einsprechens redundanter Information, also redundanter Referenz-Sprachsignale bzw. Gegen-Sprachsignale zu mildern, ist es in einer Weiterbildung des Verfahrens vorgesehen, den zu verifizierenden Sprecher und/oder den weiteren, nicht zu verifizierenden Sprecher lediglich zum einmaligen Einsprechen der jeweiligen Sprachprobe aufzufordern, und das jeweils eingesprochene Sprachsignal beispielsweise mittels dem in dem Dokument [3] beschriebenen Verfahren einer zeitlichen Verzerrung des jeweiligen Sprachsignals SPS, SPSi zu unterziehen und somit durch die zeitliche Verzerrung eine Mehrzahl von Referenz-Sprachsignalen und/oder Gegen-Sprachsignalen aus lediglich jeweils einer eingesprochenen Sprachprobe abzuleiten.

Ferner ist es vorteilhaft, als Sprachsignale lediglich einzelne gesprochene Buchstaben und/oder einzeln gesprochene Ziffern zu verwenden.

Durch diese Weiterbildung der Verfahren wird es möglich, die Durchführung des Verfahrens durch den Rechner R zu beschleunigen und den benötigten Speicherplatzbedarf in dem Rechner R erheblich zu reduzieren.

Durch diese Weiterbildung des Verfahrens wird auch eine Realisierung des Verfahrens in sehr kleinen Geräten unter erheblich geringerem Aufwand realisierbar.

So ist es beispielsweise sehr vorteilhaft, das Verfahren zur Sprecherverifikation zur Authentifikation eines Besitzers beispielsweise eines Telekommunikationsendgerätes oder auch eines Mobilfunkendgerätes zu verwenden.

Im Rahmen dieses Dokumentes wurden folgende Veröffentlichungen zitiert:
[1] S. Furui, Cepstral Analysis Technique for Automatic Speaker Verification, IEEE Transactions ASSP, Vol. ASSP-29, Nr. 2, S. 254-272, April 1981
[2] G. Ruske, Automatische Spracherkennung, Methoden der Klassifikation und Merkmalsextraktion, Oldenbourg-Verlag, ISBN 3-486-20877-2, S. 11-22 und S. 67-105, 1988
[3] B. Kämmerer und W. Küpper, Experiments for Isolated Word Recognition, Single- and Two-Layer-Perceptrons, Neural Networks, Vol. 3, S. 693-706, 1990
[4] M. Forsyth, Discriminating Observation Probability (DOP) HMM for Speaker Verification, Speech Communication, Band 17, Seiten 117-129, 1995

## Patentansprüche

1. Verfahren zur Sprecherverifikation anhand mindestens eines von einem Sprecher (SPR) eingesprochenen Sprachsignals (SPS), durch einen Rechner (R),
a) bei dem für das Sprachsignal (SPS) mindestens ein Merkmalsvektor (MV) gebildet wird (101),
b) bei dem der Merkmalsvektor (MV) mit mindestens einem Referenz-Merkmalsvektor (RMV), der aus mindestens einem Sprachsignal eines zu verifizierenden Sprechers gebildet wurde, verglichen wird (102),
c) bei dem der Merkmalsvektor (MV) mit mindestens einem Gegen-Merkmalsvektor (GMV), der aus mindestens einem Sprachsignal eines weiteren Sprechers, der nicht der zu verifizierende Sprecher ist, gebildet wurde, verglichen wird (103),
d) bei dem aus den Vergleichen ein Ähnlichkeitswert gebildet wird (104), mit dem eine Ähnlichkeit des Merkmalsvektors (MV) mit dem Referenz-Merkmalsvektor (RMV) und eine Ähnlichkeit des Merkmalsvektors (MV) mit dem Gegen-Merkmalsvektor (GMV) beschrieben wird, und **dadurch gekennzeichnet ist, dass**,
e) falls der Ähnlichkeitswert um einen vorgebbaren Bereich um einen vorgebbaren Wert abweicht, der Sprecher als der zu verifizierende Sprecher klassifiziert wird (105).

2. Verfahren zur Sprecherverifikation anhand mindestens eines von einem Sprecher (SPR) eingesprochenen Sprachsignals (SPSi), durch einen Rechner,
a) bei dem für das Sprachsignal (SPSi) mindestens ein Merkmalsvektor (MVi) gebildet wird,
b) bei dem der Merkmalsvektor (MVi) mit mindestens einem Referenz-Merkmalsvektor (RMVi), der aus mindestens einem Sprachsignal eines zu verifizierenden Sprechers gebildet wurde, verglichen wird (102),
c) bei dem der Merkmalsvektor (MVi) mit mindestens einem Gegen-Merkmalsvektor (GMVi), der aus mindestens einem Sprachsignal eines weiteren Sprechers, der nicht der zu verifizierende Sprecher ist, gebildet wurde, verglichen wird (103),
d) bei dem die Verfahrensschritte a) bis c) mehrmals für eine eingesprochene Folge von Sprachsignalen durchgeführt wird,
e) bei dem ein Gesamt-Ähnlichkeitswert durch einen Gesamt-Vergleich mindestens eines Teils der Folge von Sprachsignalen mit den entsprechenden Referenz-Merkmalsvektoren (RMVi) und den entsprechenden Gegen-Merkmalsvektoren (GMVi) gebildet wird (201), und
f) bei dem für den Fall, daß der Gesamt-Ähnlichkeitswert um einen vorgebbaren Bereich um einen vorgebbaren Wert abweicht, der Sprecher (SPR) als der zu verifizierende Sprecher klassifiziert wird (202).

3. Verfahren nach Anspruch 2,
- bei dem nach jeder Iteration der Verfahrensschritte a) bis c) aus den jeweiligen Vergleichen ein Ähnlichkeitswert gebildet wird, mit dem eine Ähnlichkeit des Merkmalsvektors mit dem Referenz-Merkmalsvektor und eine Ähnlichkeit des Merkmalsvektors mit dem Gegen-Merkmalsvektor beschrieben wird, und
- bei dem nur für den Fall, daß der Ähnlichkeitswert um einen vorgebbaren Bereich um einen vorgebbaren Wert abweicht, eine neue Iteration durchgeführt wird, und
- bei dem sonst der Sprecher nicht als der zu verifizierende Sprecher klassifiziert wird.

4. Verfahren nach einem der Ansprüche 1 bis 3,
- bei dem die Vergleiche durchgeführt werden, indem der Merkmalsvektor einem diskriminativen Verfahren zugeführt wird,
- bei dem das diskriminative Verfahren in mindestens einer Trainingsphase vor dem Verfahren anhand des mindestens einen Referenz-Merkmalsvektors und des mindestens einen Gegen-Merkmalsvektors adaptiert wurde,
- bei dem mit dem adaptierten diskriminativen Verfahren der Ähnlichkeitswert für den Merkmalsvektor ermittelt wird.

5. Verfahren nach Anspruch 4,
bei dem das diskriminative Verfahren mit einem Polynomklassifikator realisiert wird.

6. Verfahren nach Anspruch 4,
bei dem das diskriminative Verfahren mit einem Neuronalen Netz realisiert wird.

7. Verfahren nach Anspruch 6,
bei dem das Neuronale Netz eine Pezeptron-Struktur aufweist.

8. Verfahren nach einem der Ansprüche 1 bis 5,
- bei dem in dem Verfahren mindestens zwei Referenz-Merkmalsvektoren und/oder mindestens zwei Gegen-Merkmalsvektoren verwendet werden,
- bei dem die Referenz-Merkmalsvektoren und/oder Gegen-Merkmalsvektoren durch zeitliche Verzerrung eines von dem zu verifizierenden Sprecher bzw. eines von dem nicht zu verifizierenden Sprecher eingesprochenen Sprachsignals gebildet werden.

9. Verfahren nach einem der Ansprüche 1 bis 8,
bei dem als zur Verifikation verwendete Sprachsignale einzelne gesprochene Buchstaben und/oder einzelne gesprochene Ziffern eingesetzt werden.

10. Verwendung des Verfahrens nach einem der Ansprüche 1 bis 9 in einem Telekommunikations-Endgerät.

11. Verwendung des Verfahrens nach einem der Ansprüche 1 bis 9 in einem Mobilfunk-Endgerät.

## Claims

1. Method for speaker verification by a computer (R) on the basis of at least one spoken signal (SPS) which is spoken by a speaker (SPR),
a) in which at least one feature vector (MV) is formed (101) for the spoken signal (SPS),
b) in which the feature vector (MV) is compared (102) with at least one reference feature vector (RMV) which has been found from at least one spoken signal by a speaker to be verified,
c) in which the feature vector (MV) is compared with at least one contrary feature vector (GMV) which has been formed from at least one spoken signal by a further speaker who is not the speaker to be verified,
d) in which a similarity value is formed (104) from the comparisons, which describes any similarity between the feature vector (MV) and the reference feature vector (RMV), and any similarity between the feature vector (MV) and the contrary feature vector (GMV), and
**characterized in that**
e) if the similarity value differs within a range which can be predetermined around a value which can be determined, the speaker is classified (105) as the speaker to be verified.

2. Method for speaker verification by a computer (R) on the basis of at least one spoken signal (SPSi) which is spoken by a speaker (SPR),
a) in which at least one feature vector (MVi) is formed for the spoken signal (SPSi),
b) in which the feature vector (MVi) is compared (102) with at least one reference feature vector (RMVi) which has been found from at least one spoken signal by a speaker to be verified,
c) in which the feature vector (MVi) is compared with at least one contrary feature vector (GMVi) which has been formed from at least one spoken signal by a further speaker who is not the speaker to be verified,
d) in which method steps a) to c) are carried out a number of times for a spoken sequence of spoken signals,
e) in which an overall similarity value is formed (201) by an overall comparison of at least a part of the sequence of spoken signals with the corresponding reference feature vectors (RMVi) and the corresponding contrary feature vectors (GMVi), and
f) in which, in the situation where the overall similarity value differs within a range which can be predetermined around a value which can be predetermined, the speaker (SPR) is classified (202) as the speaker to be verified.

3. Method according to Claim 2,
- in which, after each iteration of method steps a) to c), the respective comparisons are used to form a similarity value which describes any similarity between the feature vector and the reference feature vector and any similarity between the feature vector and the contrary feature vector, and
- in which a new iteration is carried out only if the similarity value differs within a range which can be predetermined around a value which can be predetermined, and
- in which, otherwise, the speaker is not classified as the speaker to be verified.

4. Method according to one of Claims 1 to 3,
- in which the comparisons are carried out by supplying the feature vector to a discriminant method,
- in which the discriminant method has been adapted in at least one training phase before the method on the basis of the at least one reference feature vector and of the at least one contrary feature vector,
- in which the adapted discriminant method is used to determine the similarity value for the feature vector.

5. Method according to Claim 4,
in which the discriminant method is implemented using a polynomial classifier.

6. Method according to Claim 4,
in which the discriminant method is implemented using a neural network.

7. Method according to Claim 6,
in which the neural network has a perceptron structure.

8. Method according to one of Claims 1 to 5,
- in which at least two reference feature vectors and/or at least two contrary feature vectors are used in the method,
- in which the reference feature vectors and/or contrary feature vectors are formed by time distortion of a spoken signal which is spoken by the speaker to be verified or by a speaker who is not to be verified.

9. Method according to one of Claims 1 to 8,
in which individual spoken letters and/or individual spoken curvatures are used as spoken signals used for verification.

10. Use of the method according to one of Claims 1 to 9 in a telecommunication terminal.

11. Use of the method according to one of Claims 1 to 9 in a mobile radio terminal.

## Revendications

1. Procédé de vérification d'un locuteur, sur la base d'au moins un signal de parole (SPS) prononcé par un locuteur (SPR), par un ordinateur (R),
a) dans lequel, pour le signal de parole (SPS), on forme (101) au moins un vecteur d'attributs (MV),
b) dans lequel le vecteur d'attributs (MV) est comparé (102) à au moins un vecteur d'attributs de référence (RMV), qui a été formé d'au moins un signal de parole d'un locuteur à vérifier,
c) dans lequel le vecteur d'attributs (MV) est comparé (103) à au moins un vecteur de contre-attributs (GMV), qui a été formé d'au moins un signal de parole d'un autre locuteur qui n'est pas le locuteur à vérifier,
d) dans lequel, à partir des comparaisons, on forme une valeur de similitude (104) qui décrit une similitude du vecteur d'attributs (MV) avec le vecteur d'attributs de référence (RMV) et une similitude du vecteur d'attributs (MV) avec le vecteur de contre-attributs (GMV), et **caractérisé en ce que** :
e) au cas où la valeur de similitude s'écarte d'une valeur pré-déteiminable dans une plage pré-déterminable, le locuteur est classé (105) comme étant le locuteur à vérifier.

2. Procédé de vérification d'un locuteur, sur la base d'au moins un signal de parole (SPSi) prononcé par un locuteur (SPR), par un ordinateur,
a) dans lequel, pour le signal de parole (SPSi), on forme au moins un vecteur d'attributs (MVi),
b) dans lequel le vecteur d'attributs (MVi) est comparé (102) à au moins un vecteur d'attributs de référence (RMVi) qui a été formé d'au moins un signal de parole d'un locuteur à vérifier,
c) dans lequel le vecteur d'attributs (MVi) est comparé (103) à au moins un vecteur de contre-attributs (GMVi) qui a été formé d'au moins un signal de parole d'un autre locuteur, qui n'est pas le locuteur à vérifier,
d) dans lequel les étapes de traitement a) à c) sont réalisées à plusieurs reprises pour une suite prononcée de signaux de parole,
e) dans lequel une valeur de similitude globale est formée (201) par une comparaison globale d'au moins une partie de la suite de signaux de parole avec les vecteurs d'attributs de référence correspondants (RMVi) et les vecteurs de contre-attributs correspondants (GMVi), et
f) dans lequel, dans le cas où la valeur de similitude globale s'écarte d'une valeur pré-déterminable dans une plage pré-déterminable, le locuteur (SPR) est classé (102) comme le locuteur à vérifier.

3. Procédé selon la revendication 2,
- dans lequel, après chaque itération des étapes du procédé a) à c), on forme à partir des comparaisons respectives, une valeur de similitude qui décrit une similitude du vecteur d'attributs avec le vecteur d'attributs de référence et une similitude du vecteur d'attributs avec le vecteur de contre-attributs, et
- dans lequel ce n'est que dans le cas où la valeur de similitude s'écarte d'une valeur pré-déterminable dans une plage pré-déterminable que l'on effectue une nouvelle itération, et
- dans lequel du reste le locuteur n'est pas classé comme le locuteur à vérifier.

4. Procédé selon l'une quelconque des revendications 1 à 3,
- dans lequel les comparaisons sont réalisées en soumettant le vecteur d'attributs à un procédé discriminant,
- dans lequel le procédé discriminant a été adapté dans au moins une phase d'entraînement effectuée avant le procédé sur la base du au moins un vecteur d'attributs de référence et du au moins un vecteur de contre-attributs,
- dans lequel, avec le procédé discriminant adapté, on détermine la valeur de similitude pour le vecteur d'attributs.

5. Procédé selon la revendication 4, dans lequel le procédé discriminant est réalisé avec un classificateur polynomial.

6. Procédé selon la revendication 4, dans lequel le procédé discriminant est réalisé avec un réseau neuronal.

7. Procédé selon la revendication 6, dans lequel le réseau neuronal présente une structure en perceptron.

8. Procédé selon l'une quelconque des revendications 1 à 5,
- dans lequel on utilise dans le procédé au moins deux vecteurs d'attributs de référence et/ou au moins deux vecteurs de contre-attributs,
- dans lequel les vecteurs d'attributs de référence et/ou les vecteurs de contre-attributs sont formés par une distorsion temporelle d'un signal de parole prononcé par le locuteur à vérifier ou par un locuteur qui n'est pas à vérifier.

9. Procédé selon l'une quelconque des revendications 1 à 8, dans lequel on utilise comme signaux de parole utilisés pour la vérification des lettres individuelles prononcées et/ou des chiffres individuels prononcés.

10. Utilisation du procédé selon l'une quelconque des revendications 1 à 9 dans un appareil terminal de télécommunications.

11. Utilisation du procédé selon l'une quelconque des revendications 1 à 9 dans un appareil terminal de radio mobile.
